# EUROPEAN PATENT APPLICATION

(11) **EP 1 964 765 A1**
(43) Date of publication of application: **03.09.2008**
(21) Application number: 08003756.7
(22) Date of filing: 29.02.2008
(51) Int. Cl.: B62K 23/06, B62K 23/02

(54) **Control device for a bicycle and bicycle comprising such a device**

(30) Priority: 01.03.2007 IT MI20070402
(71) Applicant: CAMPAGNOLO S.r.l., 36100 Vicenza (VI) (IT)
(72) Inventor: De Perini, Bruno, 36075 Montecchio Maggiore (VI) (IT)
(74) Representative: Castiglia, Paolo

(57) **Abstract**

A control device (1) for a bicycle comprises a main body (2) adapted to be associated with a bicycle handlebar and at least one control member (50,60) of at least one bicycle equipment, like for example a derailleur and/or a cyclecomputer. The main body (2) comprises an outer side wall (4) and an inner side wall (5) arranged on the opposite side to the outer side wall (4) with respect to a substantially vertical intermediate reference plane (P). The control member (50,60) can be actuated at the inner side wall (5) along at least one thrusting direction (X1,X2) that is inclined, with respect to the intermediate reference plane (P), by at least one predetermined angle (β1,β2) different to 90°. Such a control member comprises in particular a button (50) (or alternatively a lever) for actuating a derailleur in a gearshifting direction and a button (60) for controlling a cyclecomputer.

## Description

The present invention relates to a control device for a bicycle. In particular, the invention relates to a control device used to ride a bicycle and to actuate/control at least one bicycle equipment, like for example a derailleur (front or rear), a brake (for the front or rear wheel), a servo-assisted gearshift or a cyclecomputer.

More specifically, the control device of the present invention is adapted to be used in a racing bicycle, i.e. in a bicycle the handlebar of which has opposite curved free end portions.

Known control devices for racing bicycles are associated with the curved portions of the handlebar of the bicycle, one on the right and one on the left, to allow the cyclist to grip it to ride the bicycle, as an alternative to the grip onto the classical grip provided on the curved portions of the handlebar, and simultaneously actuate/control one or more equipments of the bicycle, like for example a brake (front or rear), a derailleur (front or rear) and possibly a cyclecomputer.

Throughout the present description and in the subsequent claims, the spatial terms, in particular the terms front, rear, side, upper, lower, vertical and horizontal, are used with reference to the mounted condition of the control device on the handlebar of the bicycle. The terms inner and outer, on the other hand, with reference to the handlebar in neutral position, identify the area towards the centre of the handlebar and the area opposite the centre of the handlebar with respect to an intermediate reference plane that substantially vertically passes through the control device.

Known control devices typically comprise a support body adapted to be fixed to the curved portions of the handlebar through conventional connection means, for example through a clip.

The support body is typically defined by an outer side wall, an inner side wall substantially parallel to the outer side wall, an upper wall which connects the outer side wall and the inner side wall to each other and a lower wall opposite the upper wall. All the walls are typically covered by an outer sheath.

The support body is mounted on the handlebar of the bicycle so as to project ahead from it and it is shaped so as to make it easier for the cyclist to grip it in particular racing situations. Therefore, it has an ergonomic shape, typically comprising an upward projection in the front area thereof.

One or more control members of a respective equipment of the bicycle are associated with the support body. Such control members generally consist of levers and/or buttons. In particular, control devices comprising a brake actuation lever and levers, or buttons, for actuating a derailleur and possibly also for controlling a cyclecomputer are known. Typically, levers or buttons for actuating the derailleur in a gearshifting direction and for controlling the cyclecomputer are provided on the inner side wall of the support body of the control device.

A mechanical-type control device is described, for example, in US 6,718,843 and US 6,792,826, to the same Applicant. Such a device comprises a brake lever, a first derailleur actuation lever in a first gearshifting direction, a second derailleur actuation lever in a second gearshifting direction opposite the first gearshifting direction and a button for actuating an electric switch associated with a cyclecomputer. The brake lever is articulated on the front portion of the support body and the first derailleur actuation lever is arranged behind the brake lever. The second derailleur actuation lever, on the other hand, projects from the inner side wall of the support body. The button for actuating the cyclecomputer is also associated with the inner side wall of the support body. The derailleur actuation levers can be actuated by the cyclist to cooperate with a mechanism for winding/unwinding the cable that controls the derailleur. In particular, with reference to the second derailleur actuation lever, it has a rest area for the thumb of the cyclist's hand which projects perpendicularly from the inner side wall of the support body of the control device. The button for controlling the cyclecomputer, on the other hand, can be actuated by pressing with the thumb along a direction perpendicular to the inner side wall of the support body.

The Applicant has found that the actuation of the second derailleur actuation lever of the control device of the type described above implies an upward movement of the thumb of the hand that grips the support body, whereas the actuation of the button for controlling the cyclecomputer requires a lateral movement of such a thumb. In both cases, the movement of the thumb is such as to cause a reduction in the grip of the support body and therefore a loss of efficiency in riding the bicycle.

The technical problem at the basis of the present invention is that of allowing the cyclist to effectively and easily actuate the levers and/or buttons provided on the inner side wall of the support body of the control device, without this involving a reduction in the grip of the support body and therefore a loss of efficiency in riding the bicycle.

The invention therefore relates, in a first aspect thereof, to a control device for a bicycle, comprising a main body adapted to be associated with a bicycle handlebar and having an outer side wall and an inner side wall arranged on the opposite side to the outer side wall with respect to a substantially vertical intermediate reference plane, and at least one control member of at least one bicycle equipment able to be actuated at the inner side surface of the support body, characterised in that said at least one control member can be actuated along at least one thrusting direction which is inclined, with respect to the intermediate reference plane, by at least one first predetermined angle which is different to 90°.

Throughout the present description and in the subsequent claims, the expression "intermediate reference plane", is used to indicate any substantially vertical plane which passes through the main (or support) body of the control device, not necessarily a plane of symmetry or a middle plane of such a main body.

Advantageously, the fact that the main body of the control device of the present invention has been shaped so that the levers and/or the buttons provided on the inner side wall of the main body can be actuated along a thrusting direction which is inclined, with respect to the intermediate reference plane, by at least one first predetermined angle different to 90° allows the movement of the thumb necessary to reach such control members to be minimised. In this way an effective and easy actuation of the aforementioned control members is obtained without this involving a reduction in the grip of the support body and therefore a loss of efficiency in riding the bicycle.

Preferably, said at least one first angle is between 40° and 70°, more preferably between 45° and 55° and even more preferably it is substantially equal to 50°.

In the preferred embodiment of the control device of the present invention, the aforementioned at least one control member comprises at least one button having an actuation portion movable along said at least one thrusting direction.

Preferably, the inner side wall of the main body comprises an upper portion at an upper part of the main body, a lower portion at a lower part of the main body and an intermediate portion at an intermediate part of the main body, the surface of the intermediate portion being inclined by a second predetermined angle with respect to the intermediate reference plane, wherein said at least one actuation portion of said at least one button is arranged on the aforementioned intermediate portion.

Preferably, the aforementioned second angle is substantially equal to 90°-β.

In the preferred embodiment of the control device of the present invention, the surface of the lower portion of the inner side wall of the main body is inclined by at least one third predetermined angle with respect to the intermediate reference plane. Preferably, the aforementioned surface goes away from the intermediate reference plane as one moves from the bottom towards the top.

Advantageously, a very efficient grip is achieved in this way. This is essentially due to the fact that the grip on the main body of the control device of the present invention takes place with the fingers of the cyclist's hand squeezing the support body pressing according to a more comfortable direction.

Moreover, the fact that a lower portion having a surface which is inclined with respect to an intermediate reference plane has been provided at the inner side wall of the main body allows the rest surface for the cyclist's hand to be increased and, consequently, the possibility that the fingers cross over is reduced. In this way a more efficient and comfortable grip is obtained compared to what occurs with known control devices in which the surface of the inner side wall is substantially parallel to the intermediate reference plane.

Preferably, the aforementioned angle is between 20° and 60°.

More preferably, the aforementioned angle is between 30° and 50°, and even more preferably it is substantially equal to 40°.

In an alternative embodiment of the control device of the present invention, the surface of the lower portion of the inner side wall of the main body is substantially parallel to the intermediate reference plane and has at least one area that is far away from such a plane more than an area of the surface of the upper portion of the same inner side wall.

Also in this case there is an increase in the rest surface for the cyclist's hand and, consequently, a lower probability that the fingers cross over.

In the preferred embodiment of the control device of the present invention, the surfaces of the intermediate and lower portions of the inner side wall of the main body are defined at least in part on a separate unit removably associated with the main body. However, a variant of the control device of the invention is provided wherein the surfaces of the intermediate and lower portions of the inner side wall of the main body are made in one piece with the main body.

Preferably, the control device of the present invention comprises a sealing gasket operatively arranged between the main body and the aforementioned unit.

In the preferred embodiment of the control device of the present invention, the aforementioned at least one control member comprises two buttons having respective actuation portions which are movable along respective thrusting directions which are inclined with respect to the intermediate reference plane. More preferably, the aforementioned thrusting directions are parallel to one another.

Preferably, the aforementioned two buttons comprise a first button that can be actuated to activate a derailleur in a gearshifting direction and a second button that can be actuated to interact with a cyclecomputer.

In an alternative embodiment of the control device of the present invention, the aforementioned at least one control member comprises at least one lever having an actuation portion extending along a direction not perpendicular to the intermediate reference plane and movable along said at least one thrusting direction. Said at least one lever can be actuated along said at least one thrusting direction to activate a derailleur in a gearshifting direction.

In a further embodiment of the control device of the present invention, the aforementioned at least one control member comprises a button that can be actuated to interact with a cyclecomputer and a lever that can be actuated to activate a derailleur in a gearshifting direction.

Irrespective of the specific embodiment of the device of the present invention, the surface of the upper portion of the inner side wall of the main body is substantially parallel to the intermediate reference plane.

Preferably, the device of the present invention comprises an outer coating sheath of said main body.

In a second aspect thereof, the present invention concerns a bicycle comprising the control device described above.

Preferably, such a bicycle has all of the structural and functional characteristics discussed above with reference to the control device of the present invention individually or in combination and therefore has all of the aforementioned advantages.

Further characteristics and advantages of the control device of the present invention shall become clearer from the following detailed description of some preferred embodiments thereof, made with reference to the attached drawings. In such drawings:
- figure 1 is a schematic front view of a first embodiment of a control device according to the present invention;
- figure 2 is a side view of the device of figure 1;
- figure 3 is a perspective view of the device of figure 1;
- figure 4 is a partially exploded perspective view of the device of figure 1 without the protective outer sheath;
- figure 5 is a schematic front view of a second embodiment of a control device according to the present invention;
- figure 6 is a schematic front view of a third embodiment of a control device according to the present invention;
- figure 7 is a schematic front view of a fourth embodiment of a control device according to the present invention.

The following description is made with reference to a right control device, i.e. a control device which is adapted to be associated with the handlebar of the bicycle at the curved end portion of the handlebar that, looking at the handlebar in the neutral position thereof and from a point of view like that of the cyclist during travel, is to the right of the cyclist. However, it is clear that what has been said has analogous application in the case of a left control device.

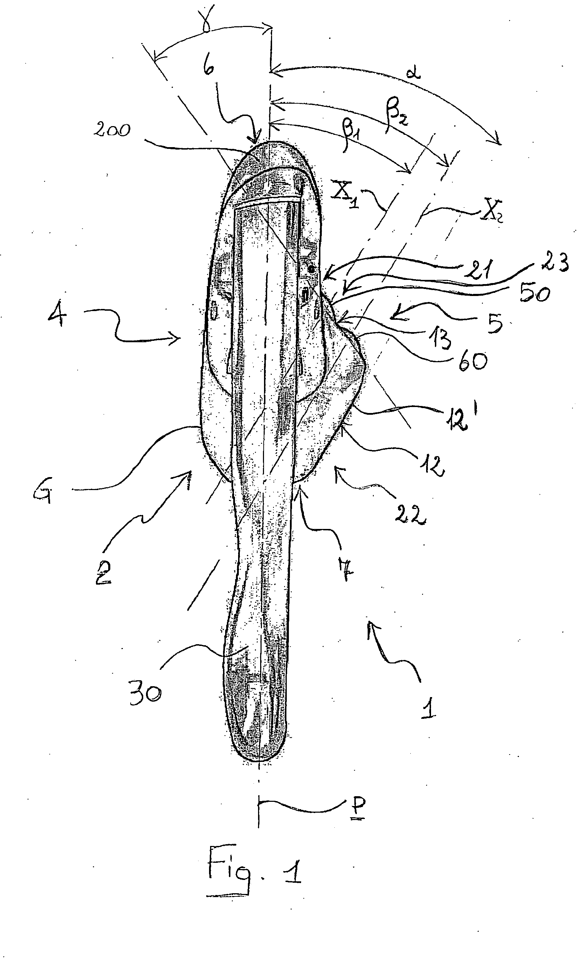

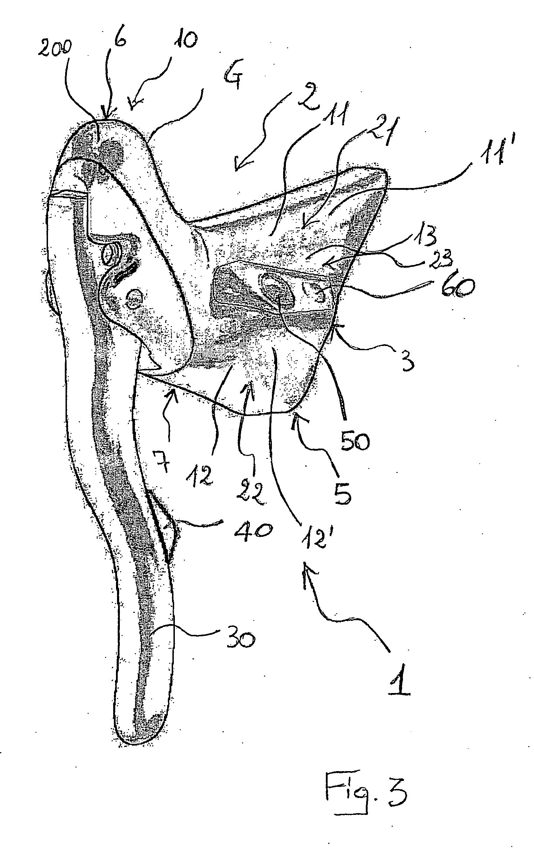

In figures 1-4, a control device in accordance with the present invention is indicated with 1.

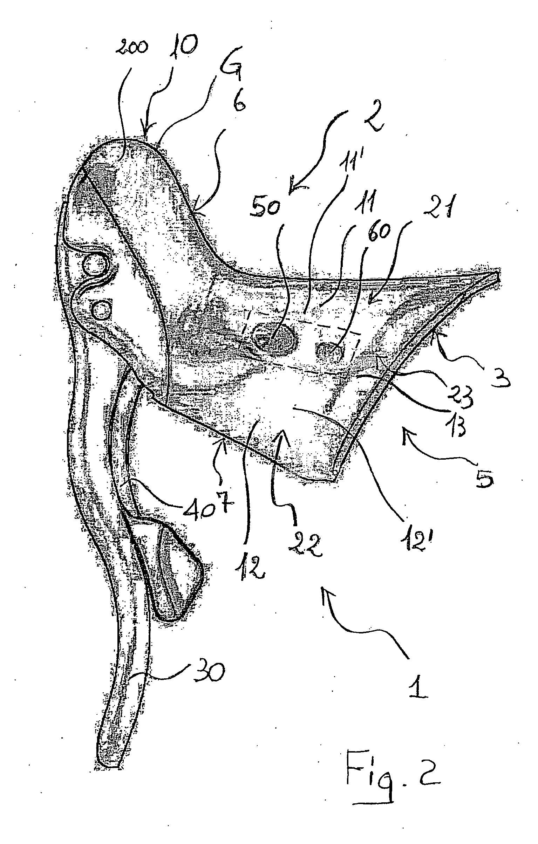

The control device 1 comprises a main body 2 (or support body) adapted to be fixed, at a rear surface 3 thereof (figure 2), to a curved end portion of a handlebar (not illustrated) of a racing bicycle, so as to project in front of said handlebar to be gripped by the cyclist.

The attachment of the main body 2 on the handlebar of the bicycle takes place through conventional connection means (not illustrated), like for example a clip.

The main body 2 is defined, as well as by the rear surface 3, by an outer side wall 4, an inner side wall 5 arranged on the opposite side to the outer side wall 4 with respect to an intermediate reference plane P that vertically passes through the main body 2, an upper transversal wall 6 which connects the outer side wall 4 and inner side wall 5 together and a lower transversal wall 7 opposite the upper transversal wall 6.

All the walls of the main body 2 are covered by an outer coating sheath G.

The main body 2 is shaped so as to make it easier for the cyclist to grip it. Therefore, it has, in a front portion 10 thereof, an upward projection 100. The upper wall 6 of the main body 2 therefore has a substantially saddle-shaped profile, as illustrated in figure 2.

The outer side wall 4 of the main body 2 has a surface substantially parallel to the intermediate reference plane P, apart from small convexities and roundings.

The inner side wall 5 has an upper portion 21 at an upper part of the main body 2, a lower portion 22 at a lower part of the main body 2 and an intermediate portion 23 at an intermediate part of the main body 2.

The upper portion 21 has a surface 11 substantially parallel to the intermediate reference plane P, and therefore to the surface of the outer side portion 4, again apart from small convexities and roundings. The lower portion 22, on the other hand, has a surface 12 which is inclined by an angle α with respect to the plane P. Between the surface 11 of the upper portion 21 and the surface 12 of the lower portion 22, and therefore at the intermediate portion 23 of the inner side wall 5, an intermediate surface 13 is defined.

The orientation of the surface 12 of the lower portion 22 of the inner side wall 5 is such that the surface 12 goes away from the intermediate reference plane P (and therefore from the outer side wall 4) as one moves along the inner side wall 5 from the bottom towards the top.

The angle α of inclination can be selected within the range of values between 20° and 60°.

In the preferred embodiment of the control device 1 of the present invention, the angle α is, however, within the range of values between 30° and 50°, and preferably it is substantially equal to 40°.

The profile of the surface of the side wall 5 of the main body 2 of the control device 1 illustrated in figures 1-4 is therefore such that the distance between an area 12' of the surface 12 of the lower portion 22 of the inner side wall 5 and the intermediate reference plane P is greater than the distance between an area 11' of the surface 11 of the upper portion 21 of the inner side wall 5 and the intermediate reference plane P. In other words, the surface 12 of the lower portion 22 of the inner side wall 5 of the main body 2 has, in at least one area 12' thereof, a distance from the intermediate reference plane P (and therefore from the outer side wall 4) greater than an area 11' of the surface 11 of the upper portion 21 of the inner side wall 5. The main body 2 therefore has, at the lower part thereof, a thickness greater than that at the upper part thereof.

In an alternative embodiment, not illustrated, of the control device of the present invention, the surface of the lower portion of the inner side wall of the main body is substantially parallel to the intermediate reference plane and has at least one area which is far away from such a plane more than an area of the surface of the upper portion of the same inner side wall.

The control device 1 illustrated in the attached figures comprises, at the front portion 10 of the main body 2, a brake cable actuation lever 30. The lever 30 is hinged to the main body 2 at the upper part of the main body 2 in a totally conventional way.

The control device 1 also comprises a lever 40 (figure 2) for actuating a derailleur (in particular a rear derailleur) in a first gearshifting direction. The lever 40 is arranged rearwardly with respect to the brake lever 30 and is articulated to the main body 2 in a totally conventional way.

With particular reference to figures 1-4, the control device 1 further comprises, at the intermediate surface 13 defined on the intermediate portion 23 of the inner side wall 5 of the main body 2, a button 50 for actuating the aforementioned derailleur in a second gearshifting direction opposite the first gearshifting direction, and a button 60 for controlling/interacting with a cyclecomputer.

The buttons 50 and 60 can be actuated by the cyclist through the movement of their respective actuation portions along respective thrusting directions X1 and X2 neither parallel nor perpendicular to the intermediate reference plane P. In particular, the thrusting directions X1 and X2 are preferably parallel to each other and inclined, with respect to the intermediate reference plane P, by respective angles β1 and β2 (such angles β1 and β2 are therefore preferably equal).

The angles β1 and β2 can be selected within the range of values between 40° and 70°, preferably within the range between 45° and 55°.

In the preferred embodiment of the device of the present invention, the angles β1 and β2 are equal to 50°.

The surface 13 of the intermediate portion 23 of the inner side wall 5 of the main body 2 is inclined, with respect to the intermediate reference plane P, by an angle γ substantially equal to 35°. In variant embodiments, the angle γ can be selected preferably equal to 90°-β, where β is equal to β1 or β2, in the case in which β1=β2 or, an angle selected between 90°-β1 and 90°-β2, in the case in which β1 and β2 are different.

When the cyclist grips the main body 2, part of the palm of his hand rests upon the upper transversal wall 6 and part upon the outer side wall 4. The fingers of the hand, meanwhile, rest upon part of the outer side surface 4, upon the lower transversal wall and upon the inner side wall 5. The thumb embraces from the top the main body 2 resting upon the surface 11 of the upper portion 21 or upon the intermediate surface 13 of the intermediate portion 23, whereas the other fingers embrace from the bottom the main body 2 with their ends resting upon the surface 12 of the lower portion 22 of the inner side wall 5.

In order to actuate one of the two buttons 50 and 60, the cyclist slightly lifts the thumb from the main body 2 and actuates the button 50 or 60 pushing it along the direction X1 or X2. The movement of the thumb from the main body 2 is reduced and the thrusting direction is more intuitive (and therefore the thrust is more effective) compared to what occurs in devices of the prior art.

Moreover, the reduced movement of the thumb allows a safe and efficient grip to be maintained, whereas the increase in the finger rest surface caused by the inclination of the surface 12 of the lower portion 22 of the inner side wall 5 (and therefore by the fact that this is at a distance from the intermediate reference plane P greater than in the case of the devices of the prior art), prevents the ends of the fingers from interfering with the thumb and possibly accidentally actuating the buttons 50 and 60 arranged on the intermediate portion 23 of the inner side wall 5 of the main body 2.

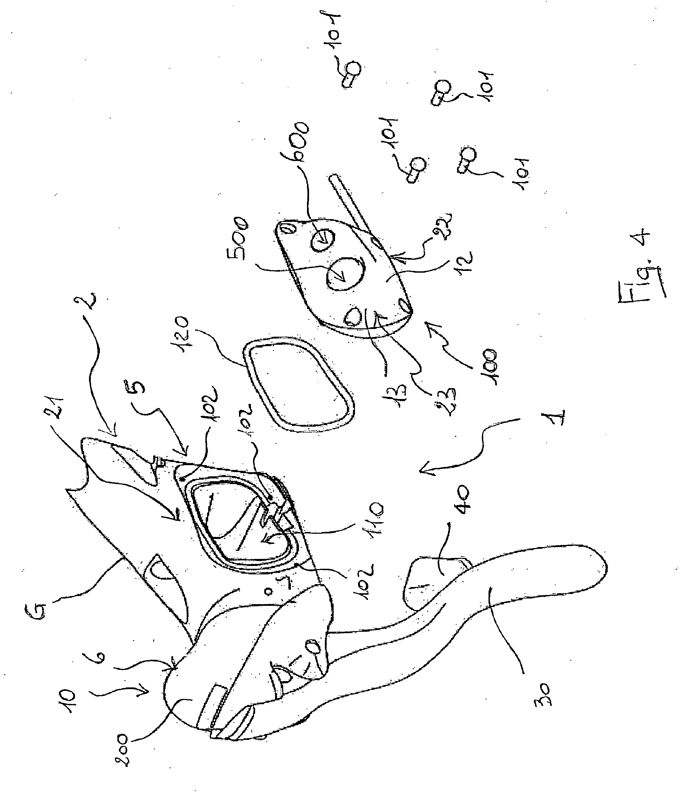

As illustrated in figure 4, the surfaces 12 and 13 of the lower portion 22 and intermediate portion 23 of the inner side wall 5 of the main body 2 are defined at least in part on a unit 100 which is removably associated with a seat 110 formed on the main body 2. The coupling between unit 100 and main body 2 takes place through screws 101 which are inserted into respective holes 102 formed on the main body 2. A sealing gasket 120 is provided between the unit 100 and the main body 2.

However, a variant of the control device of the invention is provided wherein the surfaces of the intermediate and lower portions of the inner side wall of the main body are made in one piece with the main body 2. A side surface of the unit 100 has two holes 500 and 600 from which the actuation portions of the buttons 50 and 60 project.

The control device 1 described above is of the electric/electronic type, in which the button 50 and the lever 40 act upon respective switches to generate signals managed by an electronic device for controlling a derailleur of the bicycle, whereas the button 60 acts upon a switch to generate an electronic signal managed by a cyclecomputer.

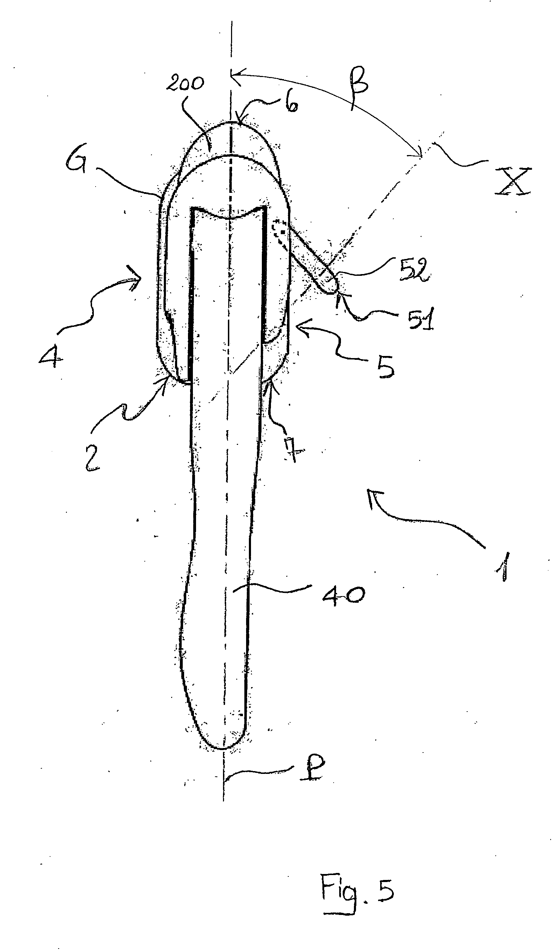

Figure 5 shows an alternative embodiment of the control device 1 of the present invention. In this figure, elements corresponding to those described above with reference to the embodiment illustrated in figures 1-4 are indicated with the same reference numeral.

The embodiment of figure 5 differs from the one illustrated in figures 1-4 in that the inner side wall 5 of the main body 2 has a surface substantially parallel to the intermediate reference plane P and to the surface of the outer side wall 4, and in that, instead of the button 50, a derailleur actuation lever 51 is provided. The lever 51 is articulated to the main body 2 at the inner side wall 5 and projects from it. In such a device, the lever 40 and the lever 50 act upon a mechanical derailleur control mechanism arranged inside the main body 2, as for example described in US 6,792,826 to the same Applicant, incorporated here by reference.

The lever 51 has an actuation portion 52 extending along a direction which is inclined, and not perpendicular, with respect to the intermediate reference plane P. Such an actuation portion 52 is intended to be pushed by the thumb of the cyclist's hand along a thrusting direction X inclined by an angle β, the value of which is between 40° and 70°, preferably between 45° and 55°. More preferably, the value of the angle β is equal to 50°.

In this embodiment, in those cases in which a button for controlling a cyclecomputer (analogous to the button 60 illustrated in figures 1-4) is also provided, this is positioned on the inner side wall 5 of the main body 2 and can be actuated by acting along a direction substantially perpendicular to this wall.

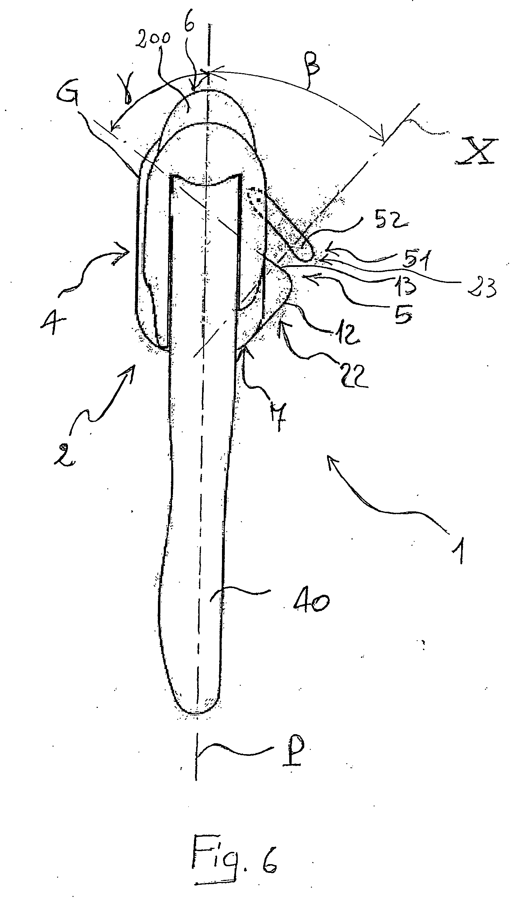

Figure 6 shows a further alternative embodiment of the control device 1 of the present invention. In this figure, elements corresponding to those described above with reference to the embodiment illustrated in figure 5 are indicated with the same reference numeral.

The control device illustrated in figure 6 differs from the one illustrated in figure 5 only in that the inner side wall 5 comprises, at the lower portion 22 thereof, a surface 12 which is inclined with respect to the intermediate reference plane P. In this embodiment, the lower portion 22 is similar to the one described with reference to figures 1-4 and determines a thickness greater than that at the upper part thereof.

The possible button for controlling the cyclecomputer is, in this case, preferably provided on the intermediate surface 13 of the intermediate portion 23 of the inner side wall 5, just as in the embodiment illustrated in figures 1-4.

The control device 1 of figure 6 is of the mechanical type, like the one of figure 5, but an embodiment is provided in which the device is of the electric/electronic type. In this last embodiment, the lever 51, instead of acting on a mechanical device, acts upon an electric switch for generating electronic signals managed by an electronic device of the bicycle and/or by a cyclecomputer.

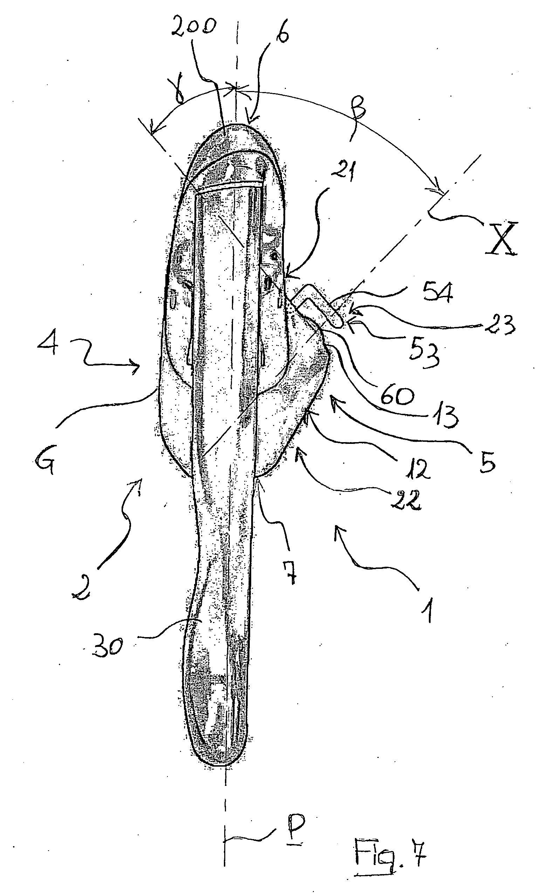

Figure 7 shows a further alternative embodiment of the control device 1 of the present invention. In this figure, elements corresponding to those described above with reference to the embodiment illustrated in figures 1-4 are indicated with the same reference numeral.

The control device illustrated in figure 7 differs from the one illustrated in figures 1-4 only in that, instead of the button 50, a lever 53 is provided, articulated to the main body 2 at the intermediate portion 13, which can act upon a control mechanism of the derailleur arranged inside the main body 2 or, alternatively, on an electric switch. The lever 53 has an actuation portion 54 extending along a direction which is inclined, and not perpendicular, with respect to the intermediate reference plane P. Such an actuation portion 54 is adapted to be pushed by the thumb of the cyclist's hand along a thrusting direction X inclined by an angle β, the value of which is between 40° and 70°, preferably between 45° and 55°. More preferably, the value of the angle β is equal to 50°.

The man skilled in the art shall recognise that it is possible to combine the various features of the embodiments described above to obtain further embodiments, all of which are in any case within the scope of protection of the present invention as defined by the subsequent claims.

## Claims

1. Control device (1) for a bicycle, comprising:
- a main body (2) adapted to be associated with a bicycle handlebar and having an outer side wall (4) and an inner side wall (5) arranged on the opposite side to said outer side wall (4) with respect to a substantially vertical intermediate reference plane (P);
- at least one control member (50,60,51,53) of at least one bicycle equipment able to be actuated at said inner side wall (5);
**characterised in that** said at least one control member (50,60,51,53) can be actuated along at least one thrusting direction (X,X1,X2) which is inclined, with respect to said intermediate reference plane (P), by at least one first predetermined angle (β,β1,β2) different from 90°.

2. Device (1) according to claim 1, wherein said at least one first angle (β,β1,β2) is between 40° and 70°.

3. Device (1) according to claim 2, wherein said at least one first angle (β,β1,β2) is between 45° and 55°.

4. Device (1) according to claim 3, wherein said at least one first angle (β,β1,β2) is substantially equal to 50°.

5. Device (1) according to any one of the previous claims, wherein said inner side wall (5) comprises an upper portion (21) at an upper part of said main body (2), a lower portion (22) at a lower part of said main body (2) and an intermediate portion (23) at an intermediate part of said main body (2), said intermediate portion (23) having a surface (13) inclined by a second predetermined angle (γ) with respect to said intermediate reference plane (P).

6. Device (1) according to any one of the previous claims, wherein said at least one control member comprises at least one button (50,60) having an actuation portion which are movable along said at least one thrusting direction (X,X1,X2).

7. Device (1) according to claim 5 and 6, wherein said at least one actuation portion of said at least one button (50,60) is arranged on said intermediate portion (23).

8. Device (1) according to claim 7, wherein said second angle (γ) is substantially equal to 90°-β.

9. Device (1) according to claim 7 or 8, wherein said lower portion (22) has a surface (12) inclined by at least one third predetermined angle (α) with respect to said intermediate reference plane (P).

10. Device (1) according to claim 9, wherein the surface (12) of said lower portion (22) of side wall moves away from said intermediate reference plane (P) as one moves from the bottom towards the top.

11. Device (1) according to claim 9 or 10, wherein said at least one third angle (α) is between 20° and 60°.

12. Device (1) according to claim 11, wherein said at least one third angle (α) is between 30° and 50°.

13. Device (1) according to claim 12, wherein said at least one third angle (α) is substantially equal to 40°.

14. Device (1) according to claim 7 or 8, wherein the surface (12) of said lower portion (22) of side wall is substantially parallel to said intermediate reference plane (P) and is far away from said intermediate reference plane (P) more than the surface (11) of said upper portion (21) of side wall.

15. Device (1) according to any one of claims 7 to 14, wherein said intermediate portion (23) and lower portion (22) of said inner side wall (5) are made in one piece with said main body (2).

16. Device (1) according to any one of claims 7 to 14, wherein said intermediate portion (23) and lower portion (22) of said inner side wall (5) are defined at least in part on a separate unit (100) associated with said main body (2).

17. Device (1) according to claim 16, comprising a sealing gasket (120) operatively arranged between said main body (2) and said unit (100).

18. Device (1) according to any one of claims 7 to 17, wherein said at least one control member comprises two buttons (50,60) having respective actuation portions which are movable along respective thrusting directions (X1,X2) which are inclined with respect to said intermediate reference plane (P) .

19. Device (1) according to claim 18, wherein said thrusting directions (X1,X2) are parallel to each other.

20. Device (1) according to claim 18 or 19, wherein said two buttons comprise a first button (50) that can be actuated to activate a derailleur in a gearshifting direction and a second button (60) that can be actuated to interact with a cyclecomputer.

21. Device (1) according to any one of the previous claims, wherein said at least one control member comprises at least one lever (51,53) having an actuation portion (52,54) extending along a direction not perpendicular to said intermediate reference plane (P) and movable along said at least one thrusting direction (X).

22. Device (1) according to claim 21, wherein said at least one lever (51,53) can be actuated to activate a derailleur in a gearshifting direction.

23. Device (1) according to claim 22 when dependent on any one of claims 6 to 17, wherein said at least one control member comprises a button (60) that can be actuated to interact with a cyclecomputer and a lever (53) that can be actuated to activate a derailleur in a gearshifting direction.

24. Device (1) according to any one of claims 7 to 23, wherein the surface (11) of said upper portion (21) of side wall is substantially parallel to said intermediate reference plane (P).

25. Device (1) according to any one of the previous claims, wherein said main body (2) comprises an outer coating sheath (G) of said main body.

26. Bicycle comprising a control device (1) according to any one of claims 1 to 25.
